Europäisches Patentamt

European Patent Office

Office européen des brevets

(19)

(11) Veröffentlichungsnummer : **0 056 656**
**B1**

(12) **EUROPÄISCHE PATENTSCHRIFT**

(45) Veröffentlichungstag der Patentschrift :
28.08.85

(51) Int. Cl.⁴ : **A 22 C 17/00**

(21) Anmeldenummer : **82100379.5**

(22) Anmeldetag : **20.01.82**

(54) Gerät zum Heraustrennen von Knochen aus Fleisch.

(30) Priorität : **21.01.81 DE 3101842**

(43) Veröffentlichungstag der Anmeldung :
**28.07.82 Patentblatt 82/30**

(45) Bekanntmachung des Hinweises auf die Patenterteilung : **28.08.85 Patentblatt 85/35**

(84) Benannte Vertragsstaaten :
**AT BE CH FR GB IT LI NL**

(56) Entgegenhaltungen :
CH-A-  592 417
DE-A- 2 510 956
DE-A- 2 818 722
FR-A- 1 406 381
FR-A- 2 226 933

(73) Patentinhaber : **Spötzl, Markus**
**Forstenrieder Allee 128b**
**D-8000 München 71 (DE)**

(72) Erfinder : **Spötzl, Markus**
**Forstenrieder Allee 128b**
**D-8000 München 71 (DE)**

(74) Vertreter : **Lamprecht, Helmut, Dipl.-Ing.**
**Corneliusstrasse 42**
**D-8000 München 5 (DE)**

## Beschreibung

Die Erfindung betrifft ein Gerät zum Heraustrennen von Knochen aus Fleisch, mit einem Antriebsorgan und einem durch das Antriebsorgan in seiner Längsrichtung bewegbaren, schmiegsamen, eine ungestützte Länge aufweisenden Schneidstrang.

Ein solches Gerät ist aus der FR-A-2 226 933 bekannt. Durch die ungestützte Länge soll sich der Schneidstrang der jeweiligen Oberflächenform des Knochens anpassen können, wobei der Schneidstrang an der Knochenoberfläche entlanggleiten und das Fleisch vom Knochen trennen soll.

Es ist bereits seit langem das Bedürfnis bekannt, im Bereich der Fleischerei die mühselige Handarbeit beim Heraustrennen von Knochen aus dem Fleisch durch ein maschinell angetriebenes Werkzeug zu erleichtern. Trotz verschiedener Bemühungen hat sich bisher in der Praxis kein Gerät dieser Art durchsetzen können. Dies Liegt vermutlich daran, daß die bisher bekannt gewordenen Trennwerkzeuge nur unvollkommen dazu geeignet sind, sich sowohl der meist unregelmäßigen Oberflächenform der Knochen anzupassen, fasern wirksam vom Knochen abzutrennen.

Nach der FR-A-2 226 933 wird als Schneidstrang ein Draht oder ein Kette vorgeschlagen. Es hat sich aber gezeigt, daß Schneidketten bekannter Art, wie sie etwa bei Kettensägen benutzt werden, für den speziellen Anwendungszweck völlig ungeeignet sind. Aber auch Schneiddrähte, welche der enormen Beanspruchung gewachsen sind, haben zu keinem brauchbaren Ergebnis geführt, u. a. deshalb, weil sie sich in den Knochen eingeschnitten haben.

Der Erfindung liegt die Aufgabe zugrunde, ein Gerät der eingangs genannten Art so zu verbessern, daß es sowohl von Hand geführt, als auch stationär angeordnet werden kann, daß es einerseits eine saubere Trennung zwischen Knochen und Fleisch ermöglicht und andererseits dabei im unmittelbaren Bereich der Knochenoberfläche den Schnitt ausführt und dabei auch unregelmäßigen Oberflächenformen der Knochen folgen und seine Aufgabe auch an scharf abgewinkelten Oberflächenkanten erfüllen kann.

Die Lösung dieser Aufgabe besteht darin, daß der Schneidstrang in Abständen Schneidkörper mit etwa in Längsrichtung des Schneidstrangs verlaufenden Schneiden aufweist.

Durch die in Abständen angeordneten Schneidkörper wird die Schmiegsamkeit des schneidstrangs nicht beeinträchtigt, so daß sich der Schneidstrang auch verhältnismäßig scharfen Krümmungen anpassen kann. Die in Längsrichtung verlaufenden Schneiden ermöglichen einen ziehenden Schnitt, der für eine saubere Trennung von Knochen und Fleisch notwendig ist. Bei stationärem Einsatz können die Rippen aufweisenden Fleischstücke beispielsweise durch eine Abtasteinrichtung gesteuert, schrittweise am Gerät vorbeigeführt werden.

Zweckmäßige und vorteilhafte Ausgestaltungen der Erfindung ergeben sich aus den Unteransprüchen.

Anhand der nun folgenden Beschreibung der in der Zeichnung dargestellten Ausführungsbeispiele der Erfindung wird diese näher erläutert.

Es zeigt:

Figur 1 eine stark vergrößerte Seitenansicht eines Teilstücks eines schmiegsamen Schneidstrangs,

Figur 2 einen Schnitt nach der Linie II-II in Fig. 1,

Figur 3 einen der Fig. 2 entsprechenden Querschnitt durch eine andere Ausführungsform des auf dem Schneidstrang angeordneten Schneidkörpers,

Figur 4 einen Schnitt nach der Linie IV-IV durch das in Fig. 5 gezeigte erfindungsgemäße Gerät, wobei die Kugellager nur sektorförmig angedeutet sind,

Figur 5 einen Schnitt nach der Linie V-V in Fig. 4,

Figur 6 eine teilweise Seitenansicht einer anderen Ausführungsform der erfindungsgemäßen Geräts,

Figur 7 eine Ansicht des in fig. 6 gezeigten Geräts in Richtung des Pfeils VII in Fig. 6,

Figur 8 einen Schnitt nach der Linie VIII-VIII in Fig. 7,

Figur 9 einen Schnitt nach der Linie IX-IX in Fig. 7,

Figur 10 einen Schnitt nach der Linie X-X in Fig. 7 und

Figuren 11-15 schematische Darstellungen weiterer Ausführungsformen des erfindungsgemäßen Geräts.

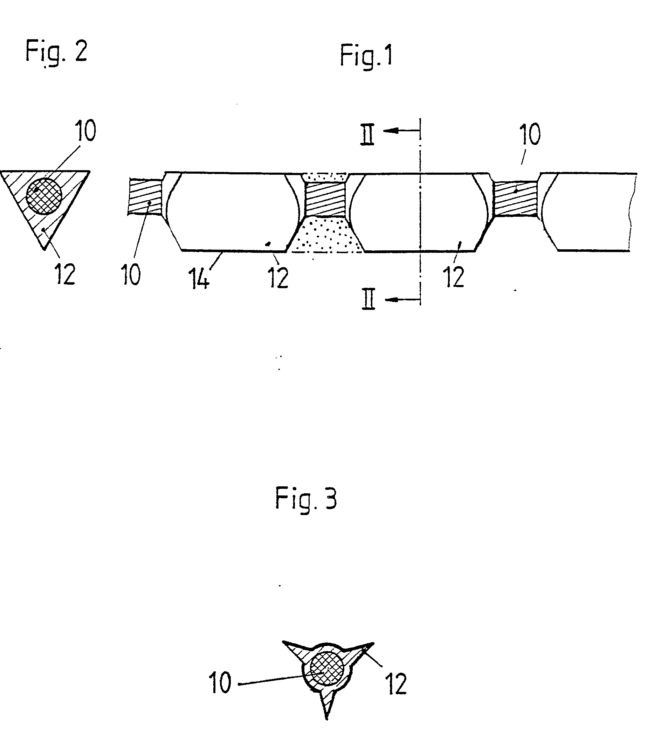

In Fig. 1 bezeichnet 10 einen Faden aus einem hochfesten, schmiegsamen, wechselnden Biegebeanspruchungen gewachsenen Material. Es Kann sich dabei beispielsweise um ein aromatisches Polyamid oder um Polyester handeln. Ein geeignetes Polyamid ist beispielsweise unter der Bezeichnung Kevlar als Erzeugnis der Firma DuPont auf dem Markt, ein geeignetes Polyestermaterial ist z. B. TREVIRA HOCHFEST der Firma Hœchst AG.

Der Faden 10 ist in regelmäßigen Abständen mit prismatischen Körpern 12 von etwa dreieckigem Querschnitt besetzt, welche fest mit dem Faden 10 verbunden sind und die beispielsweise aus Hartmetall bestehen, Wie die Fig. 3 zeigt, sind auch andere Querschnittsformen möglich. In jedem Fall besitzt der Körper 12 jedoch im wesentlichen in Längsrichtung des Fadens 10 verlaufende Schneiden 14, welche bei einer Bewegung des Fadens 10 in seiner Längsrichtung einen ziehenden Schnitt ermöglichen.

Um zu verhindern, daß sich der Zwischenraum zwischen den einzelnen Körpern 12 mit Fleischresten zusetzt, kann dieser Zwischenraum mit einer Elastomerverfüllung versehen werden, welche beispielsweise aus Silikon oder Polyurethan besteht und welche den gleichen Querschnitt aufweist wie die Körper 12, so daß der insgesamt mit 16 bezeichnete Schneidstrang einen einheitlichen Querschnitt aufweist, jedoch nur im Bereich der Schneiden 14 seine schneidende Wirkung ausübt. Die Unterbrechung der Schneidwirkung, d. h. die Beschränkung der Schneidwirkung auf die in Abständen in Stranglängsrichtung angeordneten Schneiden 14 ist durchaus erwünscht.

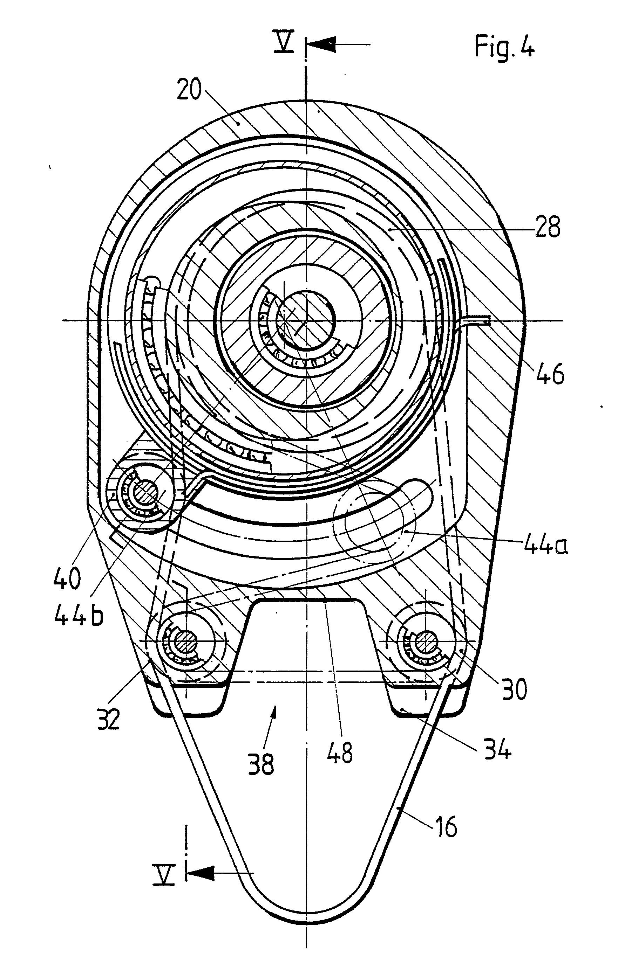

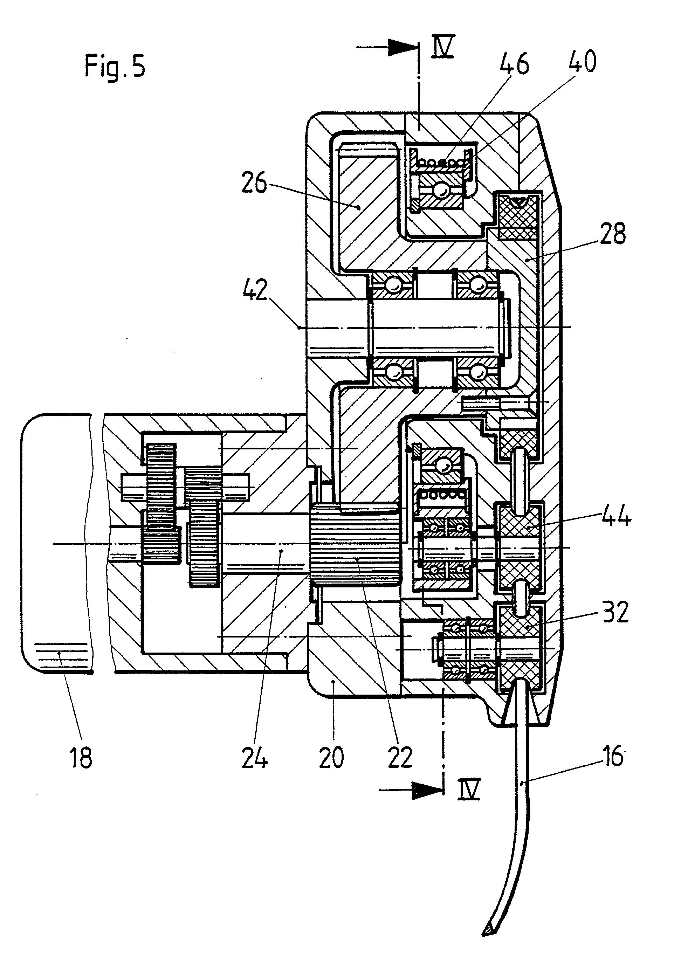

Der Schneidstrang 16 wird mittels eines geeigneten Geräts derart bewegt, daß er sich der unregelmäßigen Knochenoberfläche anpaßen kann. Die Fig. 4 und 5 zeigen eine erste Ausführungsform eines derartigen Geräts, welches mit einem zugleich als Handgriff dienenden, schematisch dargestellten Getriebemotor 18 versehen ist, welcher an ein Gehäuse 20 angesetzt ist, in das die mit einem Ritzel 22 versehene Motorwelle 24 ragt. Das Ritzel 22 steht mit einem im Gehäuse 20 gelagerten Antriebsrad 26 in Eingriff, das seinerseits drehfest mit einer Antriebsscheibe 28 für den Schneidstrang 16 verbunden ist. Ebenso wie das Antriebsrad 26 sind im Gehäuse 20 ortsfest zwei Umlenkrollen 30 und 32 für den Schneidstrang 16 gelagert, und zwar jeweils in einem Gehäusevorsprung 34 bzw. 36, wobei diese Gehäusevorsprünge 34 und 36 zwischen sich eine etwa U-förmige Einbuchtung 38 des Gehäuses 20 einschließen, so daß der Schneidstrang 16 im Bereich dieser Einbuchtung 38 zwischen den beiden Umlenkrollen 30 und 32 frei und ungestützt verläuft. Konzentrisch zum Antriebsrad 26 ist im Gehäuse 20 ein Spannarm 40 gelagert, welcher mit radialem Abstand von seiner Schwenkachse 42 drehbar eine Spannrolle 44 trägt. Diese spannrolle 44 wird durch eine konzentrisch zur Schwenkachse 42 auf dem Spannarm 40 angeordnete Schenkelfeder 46 relativ zum Gehäuse 20 in Fig. 4 entgegen dem Uhrzeigersinn vorgespannt, so daß die Spannrolle 44 bestrebt ist, ihre in Fig. 4 mit 44a bezeichnete Ruhestellung einzunehmen, in welcher der Schneidstrang 16 zwischen den Umlenkrollen 30 und 32 straff gespannt verläuft.

Im Einsatz wird das Gerät derart angesetzt, daß der Knochen, von welchem das Fleisch abgelöst werden soll, in den Raum zwischen dem Schneidstrang 16 und der Basis 48 der Einbuchtung 38 eingreift. Durch die Ausübung einer in Fig. 4 nach unten gerichteten Zugkraft auf das Gehäuse 20 wird der Schneidstrang 16 gegen die vom Gehäuse 20 abgewandte Seite des Knochens gezogen, wobei aufgrund der dadurch auf den Schneidstrang 16 übertragenen Zugkraft die Spannrolle 44 aus ihrer Position 44a entgegen der Wirkung der Schenkelfeder 46 in die der Betriebsstellung des Spannarms 40 entsprechende Position 44b verschwenkt wird, während der Schneidstrang 16 etwa die in Fig. 4 in vollen Linien dargestellte Lage einnimmt, in welcher er sich an die Oberfläche des Knochens anschmiegen kann, wobei die Anlage am Knochen einerseits durch die auf das Gehäuse 20 ausgeübte Zugkraft, andererseits auch durch die Wirkung der schenkelfeder 46 aufrechterhalten wird.

Um das Fleisch allseitig vom Knochen abzulösen, wird das Gerät einerseits in Längsrichtung des Knochens fortbewegt, andererseits wird es in der Regel erforderlich sein, die Lage des Geräts in einer quer zur Längsrichtung des Knochens verlaufenden Ebene ebenfalls zu verändern und gegebenenfalls in dieser veränderten Lage eine weitere Bewegung Längs des Knochens durchzuführen.

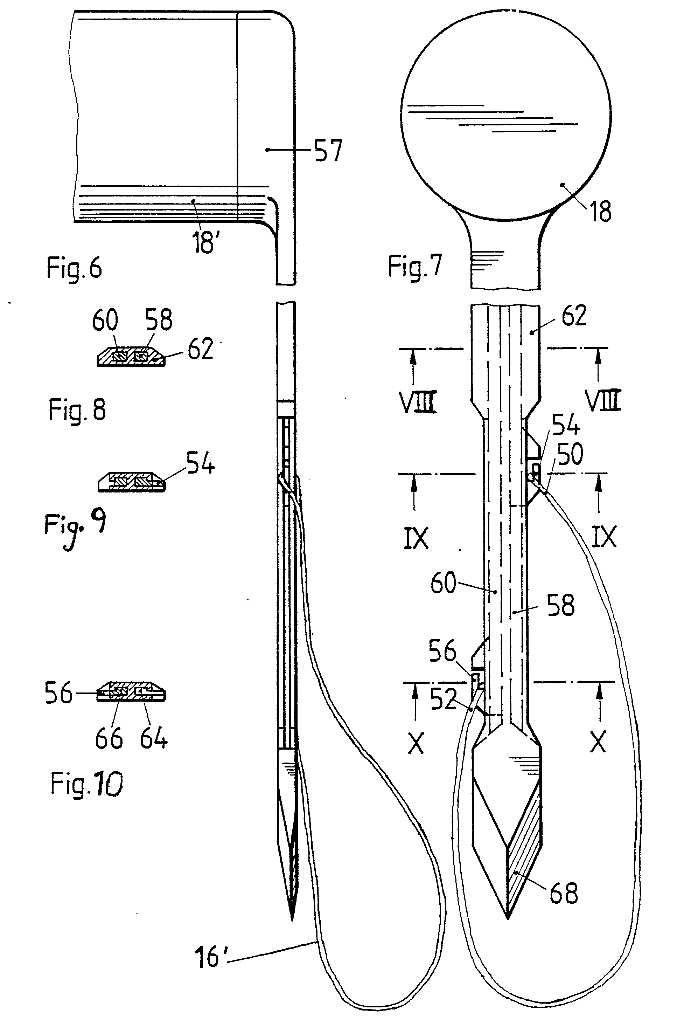

Das in den Fig. 6 und 7 gezeigte Gerät unterscheidet sich von dem Gerät nach den Fig. 4 und 5 vor allem dadurch, daß dort kein endloser Schneidstrang 16 sondern ein Schneidstrang 16' verwendet wird, der an seinen beiden Enden jeweils eine Schlaufe 50 bzw. 52 aufweist, mit welcher er in jeweils einen Haken 54 bzw. 56 eingehängt ist, welche geeignet sind, auf den Schneidstrang 16' eine hin- und hergehende Bewegung zu übertragen, im Gegensatz zur Umlaufbewegung beim Gerät nach den Fig. 4 und 5.

Zum antrieb dient wiederum ein geeigneter Motor 18', welcher über ein geeignetes Getriebe 57 auf zwei Schieber 58 und 60 eine gegenläufige hin und hergehende Bewegung überträgt. Derartige Getriebe sind bekannt, weshalb hier das Getriebe nicht näher erläutert ist.

Die Schrieber 58 und 60 verlaufen parallel zueinander an den beiden Schmalseiten eines schwertförmigen Grundkörpers 52, welcher mit dem Motor 18 und del Getriebe 56 verbunden ist. Zur Führung der Schieber 58 und 60 sind im Grundkörper 62 zwei hinterschnittene Längsführungen 64 bzw. 66 vorgesehen, wobei der Querschnitt der Schieber 58 und 60 dem hinterschnittenen Bereich der Längsführungen 64 und 66 angepaßt ist. Die Längsführungen 64 und 66 öffnen sich nach den beiden Schmalseiten des Grundkörpers 62 mit einem gegenüber dem hinterschnittenen Bereich geringeren Querschnitt, wobei diesem Querschnitt der Querschnitt der Haken 54 und 56 angepaßt ist, die über den Umriß des Grundkörpers 62 nach außen ragen.

An seinem vom Motor 18' und dem Getriebe 57 abgewandten Ende außerhalb des Bewegungsbereichs der Schieber 58 und 60 ist der Grundkörper 62 mit einer Flachen Spitze 68 versehen, welche auf derjenigen Seite des Grundkörpers 62, auf welcher der als Handgriff dienende Motor 18' liegt, stärker abgeschrägt ist, als auf der gegenüberliegenden Seite, wodurch einem Abgleiten des Geräts vom Knochen vorgebeugt wird, welcher sich üblicherweise auf der vom Motor 18' abgewandten Seite des Grundkörpers 62 befinden wird.

Der Schneidstrang 16' bildet zwischen den beiden Haken 54 und 56 eine lose Schlinge, welche um den Knochen gelegt wird. Übt man am Gerät eine geeignete Zugkraft auf, so legt sich der Schneidstrang 16' gegen die Oberfläche des Knochens, worauf dann wie bereits beschrieben verfahren werden kann, um das Fleisch vom Knochen zu trennen.

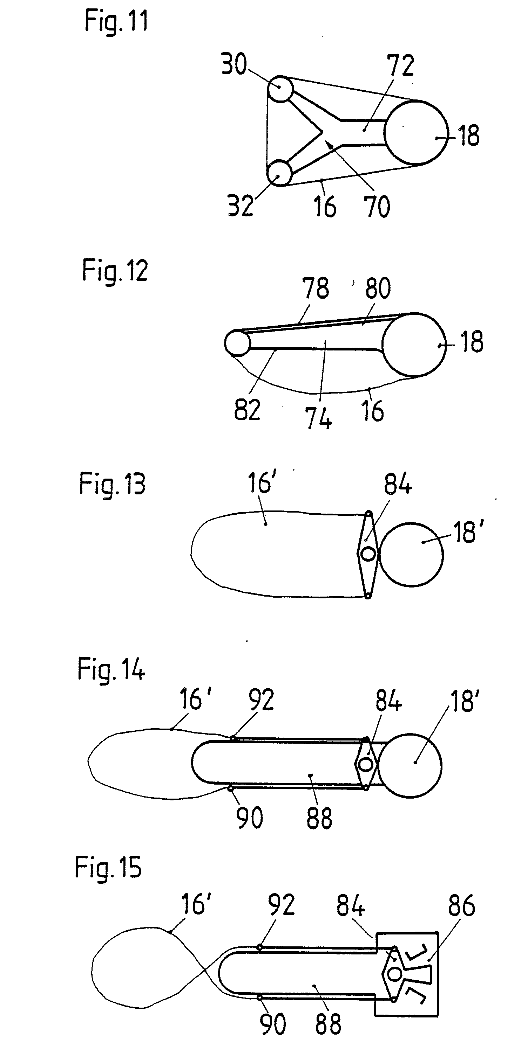

Die schematisch gezeigte Ausführungsform nach Fig. 11 zeigt eine Lösung ähnlich der Fig. 4 mit einem gabelartig gestalteten Grundkörper 70, der an einem Ende die Umlenkrollen 30 und 32 und am anderen Ende den Motor 18 trägt, wobei beiderseits des Gabelschaftes 72 der Schneidstrang 16 ebenfalls ungestützt verläuft, jedoch über eine größere Länge als zwischen den Umlenkrollen 30 und 32, so daß das Gerät unterschiedlichen Einsatzbedingungen angepaßt werden kann.

Die Ausführungsform nach Fig. 12 entspricht etwa der Ausführungsform nach den Fig. 6 und 7, nachdem auch hier ein schwertförmiger Grundkörper 74 vorgesehen ist, der an seinem einen Ende einen Antriebsmotor 18 trägt. Dieser Antriebsmotor 18 erzeugt jedoch eine umlaufende Bewegung des endlosen Schneidstrangs 16, welcher an dem vom Motor 18 abgewandten Ende des Grundkörpers 74 mit einer Umlenkrolle 76 versehen ist. Bei dieser Konstruktion bildet die eine Längskante 78 des Grundkörpers 74 etwa eine Tangente an das mit dem Motor 18 verbundene Antriebsrad und an die Umlenkrolle 76, so daß der schneidstrang 16 längs dieser längskante 78 in einer Längsführung 80 geführt werden kann. Die andere Längskante 82 ist gegenüber der der Längsführung 80 gegenüberliegenden Tangente an das Antriebsrad und die Umlenkrolle 76 in Richtung auf die Längsführung 80 zurückgesetzt, so daß dort der Schneidstrang 16 ungestützt verläuft. In diesem Bereich kann ein Knochen zwischen den Schneidstrang 16 und den Grundkörper 74 eingesetzt werden.

Die Ausführungsformen nach den Fig. 13 bis 15 betreffen wieder Geräte mit einem hin- und hergehend angetriebenen Schneidstrang 16'. Um diesen Antrieb schematisch darzustellen, ist eine Schwinge 84 gezeigt, mit welcher der Schneidstrang 16' verbunden ist. Bei den Ausführungsformen nach den Fig. 13 und 14 wird die Schwinge 84 über einen Motor 18' und sein geeignetes Getriebe angetrieben, was gegebenenfalls eine Größere Antriebskraft vermittelt als die Lösungsform nach Fig. 15, wo für die Schwinge 84 ein schematisch dargestellter Schwingankerantrieb 86 vorgesehen ist.

Abgesehen von der unterchiedlichen Gestaltung des Antriebs unterscheiden sich die Ausführungsformen nach den Fig. 13 bis 15 dadurch, daß bei der Geräteform nach Fig. 13 der Schneidstrang 16' eine freie Schlaufe zwischen den beiden Enden der Schwinge 84 bildet, die durch eine entsprechende, auf das Gerät ausgeübte Zugkraft gegen den Knochen gelegt werden kann. Die Ausführungsform nach Fig. 14 entspricht annähernd der nach den Fig. 6 und 7, wobei der Schneidstrang 16' einerseits in seinem wirksamen Arbeitsbereich am Ende eines schwertförmigen Grundkörpers 88 eine Schlaufe bildet, während er andererseits durch Führungsrollen 90 und 92 an den beiden gegenüberliegenden Schmalseiten des Grundkörpers 88 festgelegt und dort längs des Grundkörpers zur Schwinge 84 geführt wird, wobei gegebenenfalls vertiefte Führungen für den Schneidstrang 16' vorgesehen sein können.

Die Ausführungsform nach Fig. 15 zeigt schließlich noch die Variante, daß der Schneidstrang 16' zur besseren Umschlingung des Knochens eine Schlaufe bilden kann, deren Enden sich überkreuzen.

Wie aus der vorstehenden Beschreibung hervorgeht, kann das erfindungsgemäße Gerät in sehr weiten Bereichen variiert werden, sofern der schmiegsame Schneidstrang in Abständen voneinander angeordnete Schneidkörper aufweist, die etwa in Längsrichtung des Schneidstrangs verlaufende Schneiden besitzen und der Schneidstrang durch ein Antriebsorgan kontinuierlich oder hin- und hergehend beweglich angetrieben ist und über einen Teil seiner Länge derart ungestützt ist, daß in diesem Arbeitsbereich der Schneidstrang einen Knochen teilweise umschlingen kann

**Patentansprüche**

1. Gerät zum Heraustrennen von Knochen aus Fleisch mit einem Antriebsorgan (18, 18') und einem durch das Antriebsorgan (18, 18') in seiner Längsrichtung bewegbaren, schmiegsamen, eine ungestützte Länge aufweisenden Schneidstrang (16, 16'), dadurch gekennzeichnet, daß der Schneidstrang (16, 16') in Abständen Schneidkörper (12) mit etwa in Längsrichtung des Schneidstrangs (16, 16') verlaufenden Schneiden (14) aufweist.

2. Gerät nach Anspruch 1, dadurch gekennzeichnet, daß der Schneidstrang (16, 16') zwischen den Schneidkörpern (12) auf den Querschnitt dieser Schneidkörper (12) mit einer Elastomer- oder Kautschukverfüllung versehen ist.

3. Gerät nach Anspruch 1, dadurch gekennzeichnet, daß der Schneidstrang (16) als endloser Strang ausgebildet un umlaufend antreibbar ist.

4. Gerät nach Anspruch 1, dadurch gekennzeichnet, daß der Schneidstrang (16') mit zwei Enden mit einem Antriebsorgan (58, 60 ; 84) zur Erzeugung einer hin- und hergehenden Bewegung verbunden ist.

5. Gerät nach einem der Ansprüche 3 oder 4, dadurch gekennzeichnet, daß das Gerät einen schwertförmigen Grundkörper (62, 74, 88) aufweist und daß der Schneidstrang (16, 16') zumindest längs einer Seitenkante dieses Grundkörpers (74, 88) geführt ist.

6. Gerät Nach Anspruch 4, dadurch gekennzeichnet, daß es einen schwertförmigen Grundkörper (62) aufweist, an dessen beiden schmalen Längsseiten hin- und hergehend beweglich angetrieben je ein Schieder (58, 60) gelagert ist, wobei mit jedem Schieber (58, 60) je ein Ende des Schneidstrangs (16') verbunden ist.

7. Gerät nach Anspruch 6, dadurch gekennzeichnet, daß der schwertförmige Grundkörper (62) an einem Ende auf einer Breitseite einen Antriebsmotor (18') trägt und am anderen Ende eine flache Spitze (68) aufweist, die auf der den Motor (18') tragenden Breitseite gegen das spitze Ende zu abgeschrägt ist.

## Claims

1. A device for separating meat from bones comprising a drive element (18, 18') an an elongated, flexible cutting strand (16, 16') coupled to said drive element (18, 18') for movement along a travel path extending in its longitudinal direction, said strand (16, 16') being unsupported over a portion of its length characterized in that said strand (16, 16') is provided with spaced-apart cutting elements (12) having their cutting edges (14) aligned and extending in the longitudinal direction of said cutting strand (16, 16').

2. A device as claimed in claim 1, characterized in that said cutting strand (16, 16') is provided with a filler in the intermediary spaces between said cutting elements (12), which filler has a cross section corresponding to said cutting elements and is made from an elastomer or rubber.

3. A device as claimed in claim 1, characterized in that said cutting strand (16, 16') is an endless strand and is adapted to be driven in a revolving manner.

4. A device as claimed in claim 1, characterized in that said cutting strand (16') has two ends which are connected to said drive element (58, 60 ; 84) which is adapted to generate a reciprocating movement.

5. A device as claimed in one of claims 3 and 4, characterized in that it includes a tongue-like base body (62, 74, 88) and that said cutting strand (16, 16') is guided at least along one side edge of said base body (74, 88).

6. A device as claimed in claim 4, characterized in that it includes a tongue-like base body (62) having two lateral sides, and two slides (58, 60) each slidably received in one of said sides and adapted to be driven in a reciprocating manner, each end of said cutting strand (16') being coupled to one of said slides (58, 60).

7. A device as claimed in claim 6, characterized in that said tongue-like base body (62) supports at one and thereof a drive motor (18') on a wide lateral side thereof and has a flat tip (68) on its other end which, on said wide side which supports the motor (18'), is bevelled toward the end of said tip (68).

## Revendications

1. Appareil pour retirer des os de la viande avec un organe d'entraînement (18, 18') et comportant un fil de découpe (16, 16') peuvent être mû par l'organe d'entraînement (18, 18') dans le sens de sa longueur, flexible, et dont une partie de sa longueur ne repose sur aucun support, caractérisé en ce que le fil de découpe (16, 16') comporte, à distance les uns des autres, des corps coupants (12) avec des lames (14) s'étendant dans le sens de la longueur du fil de découpe (16, 16').

2. Appareil suivant la revendication 1 caractérisé en ce que le fil de découpe (16, 16') entre les corps coupants (12) comporte, sur la section transversale de ces corps coupants (12), un rembourrage en élastomère ou en caoutchouc.

3. Appareil suivant la revendication 1 caractérisé en ce que le fil de découpe (16) est conformé comme un fil sans fin et peut être mis en mouvement selon un sens rotatif.

4. Appareil suivant la revendication 1 caractérisé en ce que le fil de découpe (16') est relié à ses deux extrémités à un organe d'entraînement (58, 60, 84) afin de produire un mouvement de va-et-vient.

5. Appareil suivant l'une quelconque des revendications 3 ou 4 caractérisé en ce qu'il comporte un corps de base en forme d'épée (62, 74, 88) et le fil de découpe (16, 16') est guidée au moins de long d'une arête latérale de ce corps de base (74, 88).

6. Appareil suivant la revendication 4 caractérisé en ce qu'il comporte un corps de base (62) en forme d'épée sur les deux côtés longitudinaux et étroits duquel est fixé un curseur (58, 60), chaque curseur (58, 60) étant relié à une extrémité du fil de découpe (16').

7. Appareil suivant la revendication 6 caractérisé en ce que le corps de base (62) en forme d'épée comporte un moteur (18') à une extrémité, sur une surface large, et il présente une pointe aplatie (68) à l'autre extrémité, cette pointe étant davantage biseautée du côté de la surface large portant le moteur (18) que vers l'extrémité pointue.

Fig. 2

Fig.1

Fig. 3

Fig. 4

Fig. 5

Fig. 6

Fig. 8

Fig. 9

Fig. 10

Fig. 7

**Fig. 11**

**Fig. 12**

**Fig. 13**

**Fig. 14**

**Fig. 15**